# EUROPEAN PATENT APPLICATION

(11) **EP 0 534 599 A2**
(43) Date of publication of application: **31.03.1993**
(21) Application number: 92307342.3
(22) Date of filing: 11.08.1992
(51) Int. Cl.: H02H 7/00, H02H 3/07

(54) **Automatic control system**

(30) Priority: 14.08.1991 GB 9117820
(71) Applicant: SOUTHERN WATER SERVICES LIMITED, Worthing, West Sussex BN13 3NX (GB)
(72) Inventor: Matthews, Derek, Southampton, SO2 4BE (GB); Titcombe, Alexander John Pirie, Shirley, Southampton, SO1 2PY (GB)
(74) Representative: Topley, Paul

(57) **Abstract**

A machinery control circuit by which power is supplied to a machine (4) via a machinery control unit (7) operable to interrupt power supply in response to a first sensed parameter includes sensor means (10) to detect each operation of the machinery control unit (7), a counting and timing device (12) associated with the sensor means to count the number of operations of the machinery control (7) occurring in a predetermined time interval, an override device (8) operable to prevent operation of the machine (4) irrespective of the state of the machinery control unit (7), and means associated with the counting and timing device (12) and the override device (8) to operate the override device (8) if the machinery control unit (7) operates more than a preselected number of times within the predetermined time interval.

## Description

The present invention relates to the control of automatic machinery, and is particularly concerned with a control system for reducing the need for human intervention to restart machinery due to unnecessary automatic shutdown.

It has been the practice hitherto to incorporate various safety systems in unmanned machinery installations to effect shutdown of the plant on detection of a fault such as an overload, overheating, or any other condition detrimental to the installation or its operation.

Such systems generally require an operative to attend the installation, in order to restart the machinery and reset the automatic cutout devices, after determining and if necessary rectifying the cause of the shutdown.

A large amount of operator time is taken up, particularly in the case of remotely sited equipment, in simply travelling to the site and resetting controls after a simple overload shutdown, whose cause may have ceased to exist by the time the operator arrives on site.

An object of the present invention is to provide a control system for unsupervised machinery which, on the occurrence of a shutdown of the machinery which is initiated by the detection of a fault, can attempt an automatic restart of the machinery without compromising the protection afforded by the fault detector(s) and can differentiate between a self-curing fault and a fault requiring operator intervention.

According to the present invention, an automatic control circuit for unmanned machinery comprises:
a machinery control unit operable to shut down the machine;
a first detector which senses each operation of the machinery control unit;
a counter and timer device associated with the first detector to sense the number of times the machinery control unit operates within a predetermined time interval;
an override device capable of preventing operation of the machinery irrespective of the operation of the machinery control unit; and
logic circuitry associated with the counter and timer device and the override device so as to operate the override device to prevent machine operation if the machinery control unit operates more than a predetermined number of times in the predetermined time interval.

Preferably, circuitry in the device is associated with selector means operable to select the number of times the machinery control unit operates before the override device is operated, and adjustment means is provided to vary the length of the predetermined time interval. Provision may also be made to delay initiating the timing interval until a predetermined number of operations of the machinery control unit have occurred.

Preferably the logic circuitry further includes alarm signal means capable of emitting an alarm signal when the counter and timer device detects more than the predetermined number of operations of the machinery control unit within the predetermined time. The alarm signal is preferably directed to a manned control centre so that an operative may be dispatched to attend the machinery.

Advantageously an external alarm device can be provided so that an alarm signal can be given at each operation of the machinery control unit, for example by lighting a lamp. A display may also indicate the total number of operations of the machinery control unit and/or the override device.

An embodiment of the invention will now be described in detail with reference to the accompanying drawings, in which:
Figure 1 is a schematic view of an unmanned pumping installation;
Figure 2 is a schematic arrangement for a pump motor control circuit for use in the installation shown in Figure 1;
Figure 3 is a circuit diagram of the control circuit of Figure 2; and
Figure 3A is a circuit diagram similar to Figure 3, with the addition of selector switches S1, S2 for adjusting the time interval and event total to trip.

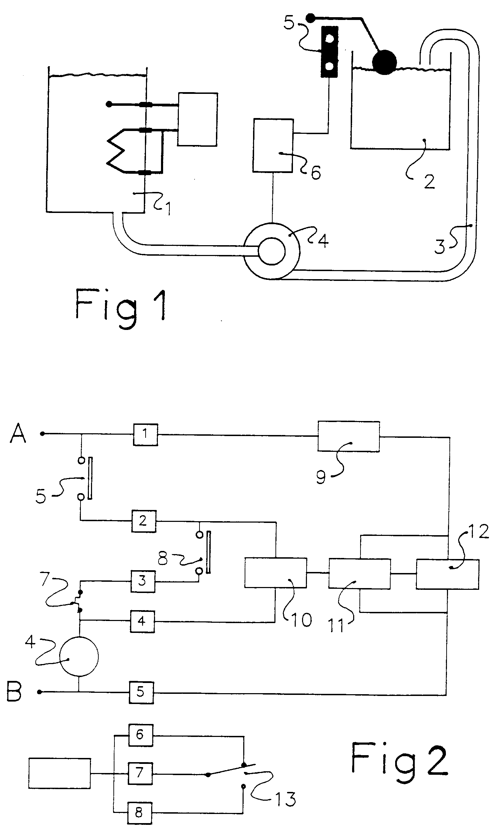

Referring to Figure 1, there is seen a pumping installation comprising a reservoir 1, a header tank 2, and a connecting duct 3. A pump 4 is situated in the duct to transfer liquid from the reservoir 1 to the header tank 2. A float switch 5 senses the level of liquid in the header tank 2, and shuts down the pump 4 when the header tank 2 is filled to the correct level, by signalling the pump control unit 6 which cuts off electrical power to the pump. The pump control circuit also includes an overheat sensor and associated switch to cut off power to the pump motor in the event that the motor overheats.

The pump control circuit is shown in greater detail in Figure 2. In this diagram, the mains supply voltage is applied at points A and B, power being transmitted to the pump 4 via a float switch 5, an overheat switch 7 and an override switch 8, connected in series. The overheat switch 7 and override switch 8 are normally closed.

A power supply unit 9 provides a low-voltage DC supply for the control circuit, which includes an event detector 10, an event counter 11, a clock 12 and an alarm circuit 13.

In normal operation, the overheat switch 7 and the override switch 8 are closed. When the float switch 5 closes due to a fall in the liquid level in the header tank 2, power is fed to the pump 4. When the liquid level in the header tank 2 is restored, float switch 5 opens and pumping stops. During this operation, the control circuit comprising the event detector 10, event counter 11 and clock 12 take no part.

If, however, the float switch 5 and the override switch 8 are closed and the overheat switch contacts open, a situation which can occur due to a motor overload, then the event detector 10 is operated since the mains supply voltage appears across the overheat switch contacts.

The event detector sends a signal pulse to the event counter 11, which stores the pulse as a count of 1 event and also sends an initiating pulse to the clock 12. The clock is driven by a mains frequency square wave generated in the power supply unit 9. The clock 12 is arranged to run for a preselected interval after initiation.

If, during this interval, the pump motor cools sufficiently for the overheat switch to close again, and the pump 4 resumes operation only to be again interrupted by the opening of the overheat switch 7 a second time, then the event detector 10 sends a further pulse to the event counter 11, raising the event counter to 2. If this cycle is repeated a sufficient number of times within the preselected clock interval, then the event counter generates a further pulse which causes the clock to be stopped and reset to zero, and which also causes the power supply circuit to the motor to be broken by opening the override switch 8, and also causes an alarm signal to be emitted by an alarm circuit. Preferably the override switch and alarm circuit form part of a multiple pole relay so that they are simultaneously operated.

If, during the preselected clock interval, the pump restarts due to the closing of the overheat switch 7, and the switch 7 does not again open, then the clock continues to run until the end of its preset interval, whereupon the clock emits a 'Time up' pulse which not only resets the clock to zero and stops it, but is also fed to the event counter, resetting it to zero.

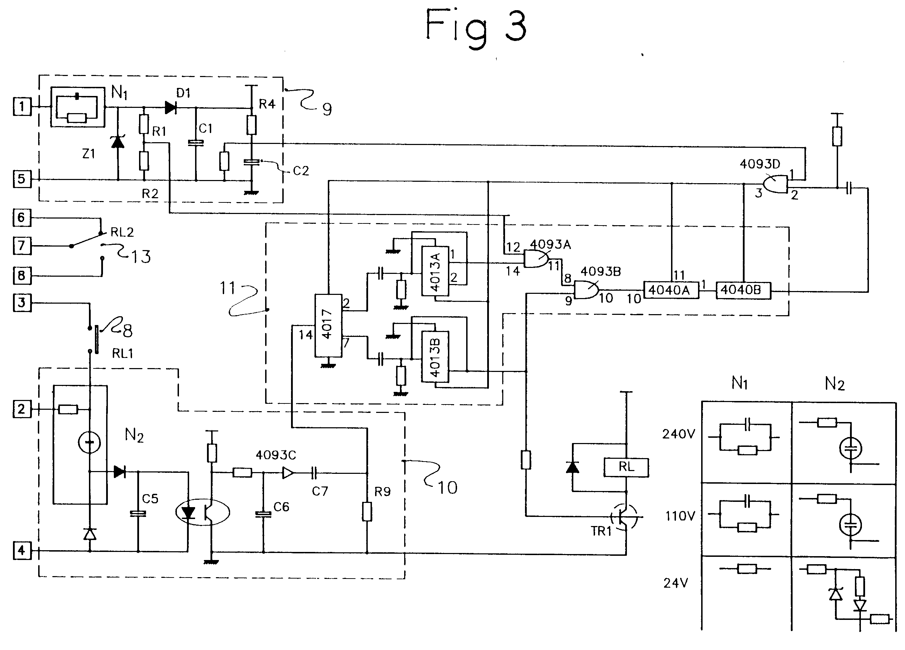

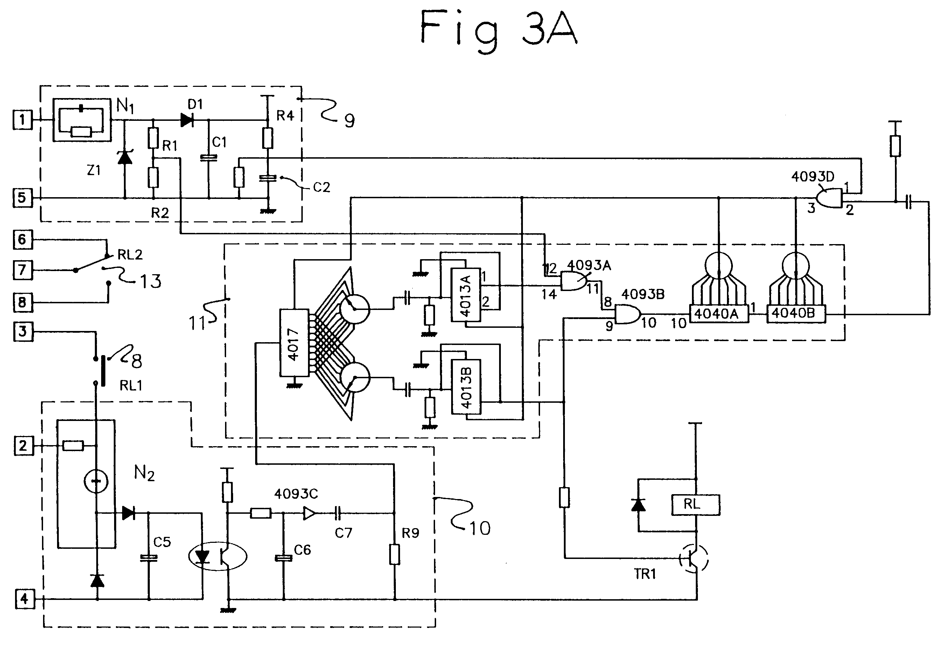

Referring now to Figure 3, the circuitry of an embodiment of the control system is shown in detail.

The supply unit 9 provides twelve volts DC, a square wave of mains frequency, and a delayed voltage to reset the event counter and clock to zero at switch-on.

Network N1, whose construction depends on the supply voltage to the system, provides a constant current of approximately 10mA at mains frequency. Three alternative arrangements for N1 are seen at the lower right part of Figure 3. The positive going half waves are clipped by Z1, passed by D1 and smoothed by C1. Resistor divider R1/R2 drives the clock line with a ten volt square wave. The time constant of R4/C2 holds the power-up reset line low for about half a second, disabling the event counter 11 and permitting the main control circuits to start correctly.

The event counter 11 and clock 12 are built from integrated logic circuits. At switch-on their outputs assume random values and must be deliberately cleared (set to zero) for correct operation.

Because the voltage on the power-up reset line lags behind that of the twelve volt supply rail, pin 3 of AND gate 4093D stays high, clearing and disabling the circuit elements connected to it. The output of the upper latch 4013A is low, disabling the first AND gate 4093A on the clock line. Lower latch 4013B output is high enabling the second clock AND gate 4093B to pass clock pulses as they arrive. Transistor Tr1 is switched on, energising relay RL so as to close its contacts RL1, thus completing the circuit connected between terminals 2 and 3 which forms the override switch 8 of the power supply to the pump motor. After about half a second the voltage on the power-up reset line becomes high enough for pin 3 of AND gate 4093D to be pulled low. No other outputs change, but the module is enabled.

The event counter 4017 is a decade counter/one of ten decoder. Since the ten output pins are energised singly and sequentially, the latches 4013A and 4013B are needed to 'remember' that an output has occurred. At the first event, pin 2 of event counter 4017 goes high. The transition, differentiated into a pulse, causes the upper latch 4013A to change state. Pin 1 of latch 4013A and pin 13 of AND gate 4093A go high, allowing clock pulses to appear at pins 11 and 10 of AND gates 4093A and 4093B, respectively, and at pin 10 of 4040A of the clock. 4040A and 4040B are simple counter chips with numerous output pins.

Now, if no other events occur;
Exactly half way through the timing period pin 14 of counter 4040B goes high with no other effect. On completion of timing, pin 14 of 4040B goes low, placing a negative going pulse onto pin 2 of AND gate 4093D. Pin 3 of 4093D goes high for just long enough to clear the counter 4017, latches 4013A and 4013B, and counters 4040A and 4040B.

But if six events occur;
Pin 7 of event counter 4017 goes high, the lower latch 4013B changes state, pin 8 of 4093B goes low, stopping clock pulses from reaching pin 10 of 4040A. The clock is stopped, also Tr1 is turned off and relay RL is released. Relay RL has contacts RL1 and RL2, and on release of relay RL the contacts RL1 open (to disable the external circuit and prevent power supply to the pump motor), and contacts RL2 change over, energising any alarm circuit connected to terminals 6 and 7 and breaking any indicator circuit connected between terminals 7 and 8.

As no auto reset is now possible, and contact RL1 forms a permanent 'event', the circuit will remain in this condition until its mains supply is interrupted, whereupon it will reset with counters and clock zeroed, relay RL energised, and contacts RL1 closed.

The event counter 4017 has ten output pins corresponding to the counts of 0 to 9. Since the output for 0 is redundant and only two of the remainder are used, any of the pins corresponding to event totals from 1 to 8 may be used to start the timer and any corresponding to event totals from 2 to 9 to raise the alarm by connecting the appropriate pins. As is seen from Figure 3A, by connecting all the output pins of 4017 to two selector devices S2 the number of events before the timer is started and the number to trigger an override can be initially chosen and subsequently altered by adjustment of the selector device.

Similarly the length of the timing period may be programmed by selecting an appropriate pin from either of 4040A or B. As each has twelve output pins, intervals of a few hundredths of a second to 96 hours may be set. Each successive interval is double the previous, for example, 6, 12, 24, or 48 hours. These examples are only approximate and will be 20% less on 60Hz mains than on 50Hz mains. However, incorporation of additional logic circuitry could provide considerable refinement in the adjustability of the timing duration, if required by a particular application. For example, as seen in Figure 3A, by connecting a simple selector switch S1 to all the terminals of 4040A and 4040B, the required time interval may be selected by simply operating the selector switch to connect the appropriate pins to the auto-reset line.

Supplying the input to the event counter block 11 is the event detector 10, which is provided with an optical coupling OPTO1 to electrically isolate the control circuitry from the supply voltages. An input network N2, whose arrangement is dependant on the supply voltage, connects the optical coupling OPTO1 to two points in the pump power circuit on either side of the overload switch 7. Three alternatives for the arrangement of network N2 are seen at the lower right part of Figure 3.

For line voltages above one hundred volts, the input network N2 contains a resistor and a small neon lamp. The resistor value is chosen to limit the current flow to about 1mA at full line voltage. The high breakdown voltage of the neon rejects standing voltages of up to forty volts as well as giving a visible indication of faults.

Below one hundred volts standing voltages are not a problem and the third alternative N2 network is used, with Light Emitting Diode (LED) merely included as a visible indicator. The upper resistor of this network N2 limits current flow to 10mA approximately. The middle resistor and zener protect the LED from switching spikes. The lower resistor allows 0.5mA through OPTO1. The total resistance in N2, together with the value of C5, set a time constant of about one second, to eliminate switching spikes. When the overheat switch opens, supply voltage appears at the input to network N2, and eventually the LED in OPTO1 conducts, illuminating the included photo-transistor, which also conducts, discharging C6 over about three seconds. When the voltage across C6 has fallen sufficiently, the output of the Schmitt Trigger 4093C snaps sharply to twelve volts. This transition, differentiated into a narrow pulse by capacitor C7 and resistor R9, is passed to the event counter, entering input 14 of counter 4017.

Thus a fault voltage at terminals 2 and 4 has to be large enough, and must be sustained for about four seconds before it is detected.

The control circuit described will therefore disable the motor 4 if the number of operations of the overload switch 7 exceeds a chosen value within a chosen period, and operator attendance at the installation can be reduced by eliminating the need for operator attendance to reset equipment which shuts down because of a self-curing fault.

## Claims

1. An automatic machinery control circuit wherein power is supplied to a machine (4) via a machinery control unit (7) operable to interrupt power supply in response to a first sensed parameter, sensor means (10) to detect each operation of the machinery control unit (7), a counting and timing device (12) associated with the sensor means to count the number of operations of the machinery control (7) occurring in a predetermined time interval, an override device (8) operable to prevent operation of the machine (4) irrespective of the state of the machinery control unit (7), and means associated with the counting and timing device (12) and the override device (8) to operate the override device (8) if the machinery control unit (7) operates more than a preselected number of times within the predetermined time interval.

2. An automatic machinery control circuit according to Claim 1, wherein the predetermined time interval commences when the machinery control unit (7) has operated a predetermined number of times.

3. An automatic machinery control circuit according to Claim 1 or Claim 2, wherein selector means (S1) are provided so that the length of the predetermined time interval may be adjusted.

4. An automatic machinery control circuit according to any preceding Claim, wherein selector means (S2) is provided to enable adjustment of the number of operations of the machinery control unit (7) required to cause the override device (8) to operate.

5. An automatic machinery control unit according to any preceding Claim, wherein an indicator is provided to display system parameters such as the length of the time interval remaining or elapsed, the number of operations of the machinery control unit since reset, or the like.

6. An automatic machinery control circuit according to any preceding Claim, wherein operation of the override device (8) causes the system to operate an external alarm (13).
